# EUROPEAN PATENT APPLICATION

(11) **EP 3 845 501 A1**
(43) Date of publication of application: **07.07.2021**
(21) Application number: 19219973.5
(22) Date of filing: 30.12.2019
(51) Int. Cl.: C02F 5/08, C02F 5/14, C02F 1/68, C02F 1/42

(54) **REMOVABLE SCALE COLLECTOR & INHIBITOR FILTER**

(71) Applicant: Koninklijke Philips N.V., 5656 AG Eindhoven (NL)
(72) Inventor: ZUIDERVAART, Jasper, 5656 AE Eindhoven (NL); BRUGGINK, Wilhelmus Hendrikus Maria, 5656 AE Eindhoven (NL)
(74) Representative: Philips Intellectual Property & Standards

(57) **Abstract**

The invention provides a device (1000) with a steam function, wherein the device (1000) comprises a water supply opening (101), a scale inhibitor dosing element (200), a flow control device (300), a heating unit (400), a scale collector element (500), and a water processing unit (600), wherein (i) the flow control device (300) is configured for providing a fluid (19) comprising water (10) to flow from the water supply opening (101) via the heating unit (400) to the water processing unit (600); (ii) the scale inhibitor dosing element (200) is configured for providing a scale inhibitor (250) to the water (10) at a location in the heating unit (400) and/or upstream of the heating unit (400); (iii) the heating unit (400) is configured for heating the water (10) in a heating mode and for converting the water (10) into steam (11) in a steam formation mode; and (iv) the scale collector element (500) is arranged downstream of the heating unit (400) and upstream of a flow restriction (650), wherein the scale collector element (500) is configured for collecting scale particles (21) from the fluid (19) flowing through the scale collector element (500).

## Description

### FIELD OF THE INVENTION

The invention relates to the field of scale in steam devices, and more especially to a device with a steam function wherein the scale may be collected to reduce uncontrolled scale deposition in the device. The invention further relates to a scale handling unit and a method to collect scale in a device with a steam function.

### BACKGROUND OF THE INVENTION

The issue of scale formation in devices wherein water is heated is known in the art. WO2005/108311, for instance, describes a method that reduces limestone scale deposit on surfaces and in heating elements, especially for drinking water in foodservice vending and dispensing machines without affecting the water quality. The method includes passing the water through metal particulate and polyphosphates to remove minerals therefrom and thus reduce scale deposits on water-contacted portions of such machines.

### SUMMARY OF THE INVENTION

Many domestic appliances process (drinking) water. This process often involves a heating step where the water is heated up to elevated temperatures or even taken to boiling. During this thermal treatment, Ca and Mg ions will start to precipitate from the water by forming sparingly soluble salts like carbonates, sulphates, hydroxides etc. This irreversibly precipitation can settle on the interior of piping, valves, venturies, orifices and other components or parts present in the water flow path.

The scale formation or calcification may cause fluid lines to become blocked and/or heating elements to become insulated. This in turn may result in longer processing times, decreased functional performance and finally even to malfunctioning of the device. It may also result in visual contamination. For instance, in steam irons, scaling may lead to brownish colored water being spat onto garments.

To avoid this reduced functionality and/or malfunctioning, regular cleaning is required, e.g. rinsing with (acid) solutions. This cleaning, also known as descaling, decalcifying or decalcification, is found inconvenient and cumbersome by most users.

The formation and/or deposition of scale may be reduced by the use of ion exchange resins (IEX). Contacting the water with these resins may soften the water by removing calcium ions and magnesium ions from the water and exchanging these ions by sodium and/or potassium ions.

WO2016/180647 discloses a device in which a small amount of scale inhibitors is added to the water, to prevent the formation of large-scale particles. The device further comprises a scale inhibitor absorbent for absorbing the inhibitor before leaving the outlet, to prevent outflow of (undesired) scale inhibitor in the water. The absorbent may absorb the inhibitor based on for instance physisorption, capillary condensation and/or chemisorption.

The use of scale inhibitors does not completely prevent scale formation but helps to prevent growth thereof so that the resulting scale particles remain very small ("scale micro crystals"). These scale micro crystals may easily be transported to the exit of the device, carried by or suspended in the water. However, in devices with a steam function, most of the water that in the liquid state may carry the scale particles and crystals through the device, will have evaporated in the steam mode. As a result, transport of at least part of the scale crystals may hamper, and these crystals may settle onto the inner surface of the heater or at locations further downstream of the heater. In time, the deposition of scale may grow and may start blocking the flow of water or steam. Furthermore, during time, scale chippings may become detached again and eventually may obstruct valves and/or other downstream restrictions.

This process of scale formation and release of (small) fractions of the deposited scale may be faster in devices in which the temperature fluctuates. During heating, scale may be formed and built up as a layer at e.g. the inner surface of the heater. During cooling down and heating up again, thermal stress may impact the layer, which may result in the release of small fractions, or chippings of scale ("scale particles"). The process of scale formation and release may especially be accelerated in systems or devices that are used to alternately provide hot water and steam, such as in espresso machines, wherein steam may be used for frothing milk for a cappuccino or the like and hot water may be used to brew coffee. It has been found that especially in such systems, if scale is deposited in the system during steaming, scale chippings may be released due to thermal stress, when heating the water, resulting in scale particles of relatively large size. These particles will be carried along by the water and may settle in the first restriction they encounter.

Hence, it is an aspect of the invention to provide an alternative device, especially an alternative domestic appliance, which preferably further at least partly obviates one or more of above-described drawbacks. Yet, it is further an aspect of the invention to provide an alternative method for collecting scale in a device, especially in a domestic appliance, which preferably further at least partly obviates one or more of above-described drawbacks.

According to the invention, a device is provided with a steam function ("device" or "steam device"). The device comprises a water supply opening, a scale inhibitor dosing element, a heating unit, a scale collector element, and a water processing unit.

The device may be configured for alternately generating hot water and steam. More specifically, the heating unit may be configured for heating water in a heating mode (especially to a temperature below a boiling temperature, wherein substantially no water is vaporized) and for converting the water into steam in a steam formation mode (wherein at least part of the water is vaporized). The heating unit may comprise any kind of heating element capable of heating water and converting water into steam. The heating unit may for instance comprise one or more heating elements selected from the group of a flow-through heater, a thermoblock, a heating plate, and a boiler.

The device further comprises or is connectable to a flow control device. The flow control device may be arranged upstream of the heating unit. The flow control device is configured for providing a fluid to flow from the water supply opening via the heating unit to the water processing unit (during operation). The fluid comprises water, in liquid and/or vaporous or gaseous state ("steam"). The flow control device may for instance comprise a pump and/or valve. The device may further comprise a flow restriction, e.g. in the water processing unit and/or upstream thereof.

The scale inhibitor dosing element is configured for providing a scale inhibitor to the fluid, in particular to the water at a location upstream of the heating unit and/or at a location in the heating unit.

The scale collector element is configured for collecting scale particles from the fluid (in liquid or gaseous state) that flows via or through the scale collector element. Thus, the scale collector unit prevents at least part of the scale particles from accumulating in flow restriction(s) downstream from the heating unit, in particular in scale sensitive flow restriction(s). Preferably, the scale collector element is arranged upstream of all scale sensitive flow restrictions downstream of the heating unit. As will be explained in more detail further below, a flow restriction may be considered scale sensitive when its narrow dimensions and/or the presence of other flow restricting elements facilitate scale deposition.

With such device, scale formation in the device may be controlled. Moreover, uncontrolled accumulation or deposition of scale particles in the device along the fluid or water flow path (or in the "hydraulic circuit", see below) may be prevented. Furthermore, the dimensions of scale particles that may be formed may be controlled. Consequently, also the transport of scale particles in the device may be controlled. Blockage of the fluid flow may be reduced or prevented. Functional performance of the device (e.g. in liters of water processed or number of operating hours until malfunctioning) may increase considerably compared to known systems. Substantially all large scale particles (e.g. having a largest dimension of 1 mm or more, see further below) that may be formed in the device may be trapped in the device and removed from the fluid upstream of any scale sensitive flow restrictions, such as valves, joints, (T-)junctions, (sharp) bends, rough inner walls, and orifices, upstream of or in the water processing unit (and downstream of the heating unit, as indicated by "further" in "further (scale sensitive) flow restriction(s)". This way, formation or depositing of scale in the water processing unit is prevented. Moreover, the product exiting the water processing unit may be absent of scale. For instance, in steam irons, possible spats of brownish colored water onto garments may be avoided; in coffee machines, taste of the produced coffee may be improved

Moreover, in embodiments of the device, scale may physically be removed (when required) from the device to further facilitate the prevention of blockage of the flow path and increase the device performance and optionally lifetime.

The device may be connectable to a water supply network or water mains, e.g. via a water tap, or may be a standalone device, such as e.g. a standalone steam generating device, a water cooker, etc. Especially, the device is a device wherein a heating step of water is applied, even more especially including a heating step wherein the water is converted into steam, as especially then scaling and scale particle formation may be a problem, as explained above.

Herein, the device may be a domestic appliance ("appliance") or part thereof, having a steam function. The appliance may for instance be selected from the group of a steam cleaner, a food steamer, a kettle, a coffee maker, an espresso machine, a tea maker, a hot chocolate maker, a beverage dispenser, a soup maker, a water cooker, a steam generation device, a steam iron, and an air humidifier.

The domestic appliance may be an electronic domestic appliance, including e.g. an electronic heating unit and optionally other functionalities. A domestic appliance may be defined as a piece of (electrical) equipment used in the home, especially in the kitchen. Domestic appliances may, however, also be used in offices. In general, domestic appliances are not industrial appliances, but may include relatively small units, including e.g. portable units. Hence, the term "domestic appliance" also relates to a coffee machine as embodiment of a coffee maker, a soup machine as embodiment of a soup maker, etc. Further, the domestic appliance may be a wireless domestic appliance, such as comprising a (rechargeable) battery and/or may be a wired domestic appliance.

Herein, the term "water" may be used to refer to liquid water, gaseous water (also referred to as "steam" or "vaporized water") or a mixture of liquid and gaseous water. Also the term "fluid" may be used to refer to the (liquid and/or gaseous) water. Based on the context, it will be clear to the skilled person whether water or fluid refers to liquid water, gaseous water or a mixture of liquid and gaseous water.

Especially, because of the heating of the water, minerals (like calcium and magnesium) may crystallize to form scale (particles) that eventually may deposit. In the crystallization process, small crystals may gradually grow to larger crystals and form scale (particles). Such deposit may (gradually) at least partly block a fluid path through the device. The scale, when present in the heating unit may further reduce any heat transfer to the fluid (water) to be heated. To minimize growth of the crystals, the scale inhibitor may be provided to the water. The scale inhibitor may reduce the formation of scale. In particular, the scale inhibitor may limit scale nucleation and growth. The scale inhibitor may therefore sometimes also be indicated as "descaling agent" or "descalant" or "inhibitor". Scale inhibitors like poly-phosphates and phosphonates are well known for their scale inhibiting properties. They are widely applied in the food processing and drinking water industry. Many different types of scale inhibitor exist. Most common types contain either inorganic phosphate or organic phosphate. Organic phosphates, a synthetic inhibitor, often denoted as phosphonates, show a superior anti scaling performance over a broad temperature and water quality range. A typical example is hydroxy-ethylidene 1,1-di-phosphonic acid or its corresponding salt. This phosphonate inhibitor is stable and effective at temperatures (even) above 100 °C.

In a specific embodiment, the scale inhibitor comprises one or more of HEDP (1-hydroxy(ethane-diphosphonic acid)), NTMP (Nitrilotris(methylene-phosphonic acid)), DTPMP (Diethylenetriamine penta(methylene-phosphonic acid)), and a salt of one or more of the afore-mentioned. The term "scale inhibitor" may also refer to a plurality of different scale inhibitors. Especially, at least HEDP is applied. In yet another embodiment, alternatively or additionally the scale inhibitor comprises aminotris(methylenephosphonic acid) (ATMP).

The scale inhibitor may be a food grade (food approved) scale inhibitor, especially comprising a poly-phosphate compound. This is in particular advantageous if the device is intended for preparing a food or beverage, such as for instance an espresso machine, a soup maker or a food steamer.

The scale inhibitor dosing element may e.g. be configured to contain a tablet, a pellet, or any other scale inhibitor type comprising solids, such as granules, etc. Alternatively, the scale inhibitor dosing element may be configured to contain a liquid comprising the scale inhibitor. Hence, especially at least during use of the device, the scale inhibitor dosing element contains the scale inhibitor. In some embodiments, the scale inhibitor may be provided in the dosing element during production of the device.

The scale inhibitor dosing element may be configured as flow-through element. In general, there are two options that can be used to introduce the scale inhibitor: a separate element may provide the scale inhibitor, especially at a constant amount or flux, to the water substantially independent of the flow (or velocity) of the water through the device; alternatively the scale inhibitor dosing element may provide the (amount of) scale inhibitor based on the flow of the water through the device (see below).

In specific embodiments, the device is configured such that the scale inhibitor dosing element (and/or ion exchange element, see below) only needs to be filled or provided once during the lifetime of the device or appliance. Lifetimes of domestic appliance may e.g. be in the range of 5 to 7 years. Hence, the invention may contribute to a maintenance free domestic appliance (at least with respect to scale formation reduction and/or inhibition), wherein refilling the scale inhibitor dosing element (and/or the ion exchange element) may not be necessary, or optionally only a few times, like 2 to 10 times during the lifetime of the appliance.

The scale inhibitor dosing element may be removably arranged in the device. Thus, the scale inhibitor dosing element may be readily replaced with another (fresh) scale inhibitor dosing element. In such case, the scale inhibitor dosing element may be a disposable scale inhibitor dosing element. In other embodiments, the scale inhibitor dosing element, or part thereof, may be integrated in the device. In such case, the scale inhibitor dosing element may for instance be (re)fillable with new or additional scale inhibitor.

The scale inhibitor dosing element may be configured as a flow-through element, for instance with an inlet for introduction of water and an outlet in fluid communication with the heating unit. The scale inhibitor dosing element may also be configured to release scale inhibitor upon contact with water. In specific embodiments, the scale inhibitor dosing element may thus be configured to provide the scale inhibitor to the water at a location in the heating unit. In other words, the scale inhibitor may be provided inside the heating unit.

The scale inhibitor dosing element may comprise a (immobilized) slow-release element comprising said scale inhibitor and configured to release scale inhibitor upon contact with water. For instance, a slow-release tablet or pellet may be used. However, also polymers may be applied wherein the scale inhibitor is releasably embedded. Embodiments may include substantially any porous or non-porous material (inorganic or organic) that either comprises e.g. void volume to hold the inhibitor or can be mixed with any other material to provide controlled release of inhibitor. So e.g. porous ceramics, porous plastics, porous metals can do in this respect, but also materials that incorporate inhibitors as an additive. Combinations of two or more dosage types of scale inhibitors, such as a liquid comprising scale inhibitor and granules comprising scale inhibitor, may also be used.

The scale inhibitor may be present in the inhibitor dosing element as a coarse-grained powder, optionally in a fine-mesh envelope. The fine-mesh envelope allows, on the one hand, a satisfactory interaction between the water and the powder and, on the other hand, precludes that the powder itself can obstruct the flow path. Preferably, however, the inhibitor is provided in the inhibitor dosing element in the form of a compressed pellet. In specific embodiments, such a pellet may be accommodated in an envelope, which consists either partly, or completely of a fine-mesh material. This may especially be relevant in the case of a flow-through inhibitor dosing element.

Alternatively or additionally, the scale inhibitor dosing element comprises a metering unit configured to provide a controlled amount of scale inhibitor or descaling liquid comprising such scale inhibitor to the water. Such embodiment may especially be relevant when a liquid scale inhibitor is applied.

Especially, the scale inhibitor dosing element may configured to maintain a predetermined minimum and/or maximum concentration of the scale inhibitor in the water (downstream of the scale inhibitor dosing unit), for instance in the range of 0.1 to 10 ppm (especially for the liquid in the heating unit).

The device may further comprise a control unit or controller, configured to control one or more of the flow control device (e.g. a pump and/or valve), the heating unit, the scale inhibitor dosing element, etc. The control unit may for instance be configured to provide a predetermined minimum concentration and/or a predetermined maximum concentration of the scale inhibitor in the water, e.g. in the range of 0.1-10 ppm (in the liquid upstream and/or in the heating unit). To this end, the control unit may control the output of scale inhibitor from the scale inhibitor dosing element This may for instance include controlling of a metering system and/or controlling of an influx and output of water (in the case of a flow-through scale inhibitor dosing element), etc. The device may for instance comprise a (controllable) flow diverter or a by-pass, configured to control influx and output of water, and especially to control the concentration of inhibitor in the water.

As indicated above, the scale inhibitor may be provided as liquid comprising the scale inhibitor or as a solid material, including a tablet, comprising the scale inhibitor (for a slow release thereof). In specific embodiments, such tablet may be arranged in the heating unit.

It appears that with only a few ppm of scale inhibitors already a large descaling can be achieved. For instance, with the present invention, a coffee-maker can be provided with a tablet including 5 to 30 gram, more particularly 5 to 10 gram scale inhibitor, which can be active for the whole lifetime of the appliance.

In further embodiments, the scale inhibitor dosing element may be configured to provide the water (at a location of the inhibitor dosing element) with scale inhibitor in the range of 1 to 10 ppm (at a location upstream and/or in the heating unit).

The term "scale inhibitor dosing element" may relate to a plurality of (different) scale inhibitor dosing elements. For instance in an embodiment, the device may comprise a first scale inhibiter dosing element comprising a liquid comprising the scale inhibitor and a second scale inhibitor dosing element comprising a pellet comprising the scale inhibitor. Likewise, the term "scale inhibitor" may relate to a plurality of (different) scale inhibitors (being comprised in one or more scale inhibiter dosing element).

In further embodiments, the device may comprise an ion exchange element configured to remove calcium ions from the water. The ion exchange element may additionally be configured to remove magnesium ions from the water. Thus, the ion exchange element may soften the water, and thus (further) reduce a formation of scale. The ion exchange element may comprise an ion exchange resin. The ion exchange resin may be configured to remove calcium (and magnesium) ions from the water upon contact with water. The ion exchange resin may comprise an insoluble structure or matrix that essentially acts as a medium for ion exchange. Ion exchange resins may decalcify water by substituting calcium and magnesium ions with other ions, such as sodium or potassium ions. The resin may hold these other ions at its active sites, and when being contacted with water comprising calcium and/or magnesium ions, one or more of the ions may replace (at least part of) the ions at the active sites. The resin may in embodiments be regenerated (recharged or reactivated) by contacting it with a solution comprising the other ions in a high concentration (wherein e.g. the calcium and or magnesium ions are replaced at least partly by the other ions again). The resins may be divided in four main types that differ in their functional groups: strongly acidic resins, typically comprising sulfonic acid groups; strongly basic resins, typically comprising quaternary amino groups; weakly acidic resins, typically comprising carboxylic acid groups; and weakly basic, typically comprising primary, secondary, and/or tertiary amino groups. Acidic resins may especially be relevant for softening water.

The ion exchange resin may especially comprise a weakly acidic resin. In further embodiments, the ion exchange resin may comprise a combination of the different resin types. The ion exchange resin may e.g. comprise a weakly acid resin and a strongly acid resin or e.g. the ion exchange resin may comprise a combination of resins with different active sites (combined, or e.g. configured fluidly in series). The terms "ion exchange element" and "ion exchange resin" may relate to a plurality of ion exchange elements and/or a plurality of ion exchange resin, respectively.

The ion exchange element may be configured as a flow-through element, having a fluid inlet and a fluid outlet, wherein water exiting from the outlet comprises a reduced amount of calcium (and optionally magnesium) ions relative to water entering the inlet. The ion exchange element may be arranged upstream of or in the heating unit.

The ion exchange element may be removably arranged in the device. The ion exchange element may for instance be a disposable ion exchange element that may be replaced with a fresh element. Alternatively, the ion exchange resin may be replaced with fresh ion exchange resin. In other embodiments, the ion exchange element may be regenerated.

The scale inhibitor dosing element may comprise a total inhibitor volume (Vi) of scale inhibitor, and the ion exchange element may comprise an ion exchange resin comprising a total resin volume (Vr). The resin volume may be equal to or smaller than 500 ml, such as equal to or smaller than 200 ml, such as equal to or smaller than 100 ml, especially equal to or smaller than 50 ml, such as equal to or smaller than 20 ml, such as equal to or smaller than 10 ml. In specific embodiments, the resin volume may be at least 5 ml. As described above, only a very small amount of scale inhibitor may be required to prevent scale crystals to grow. The total inhibitor volume may e.g. be in the milliliter range, such as 0.1-10 ml, especially 0.5-5 ml, even more especially 1-2 ml. In specific embodiments, a ratio of the total resin volume (Vr) to the total inhibitor volume (Vi) may therefore be selected from the range of 500:1 - 50:1.

Preferably, the ion exchange element, or at least an outlet thereof, is arranged upstream of the scale inhibitor dosing element, or at least an inlet thereof.

The ion exchange element influences the pH of the water. More particularly, the ion exchange element imposes a rather constant pH on the water. A more constant pH of the water may provide a more constant dissolution of the amount of scale inhibitor in the water and thus may contribute to more accurate dosing of the scale inhibitor.

In further embodiments, the ion exchange element and the scale inhibitor dosing element may be arranged at substantially the same location. The ion exchange resin and the scale inhibitor dosing element may for instance be arranged in one scale handling unit. For instance, pellets or granules comprising scale inhibitor may be mixed or combined with ion exchange resin in a scale handling unit. Alternatively, the ion exchange resin may be arranged upstream of the scale inhibitor dosing element within the scale handling unit.

More generally, the scale handling unit may be configured to comprise a combination of elements related to the reduction of scale. These elements (hereinafter also referred to as "scale reducing elements") may for instance comprise the scale inhibitor dosing element, the ion exchange element and the scale collector element. The scale handling unit may comprise an assembly of two or three of these scale reducing elements. To that end, the scale handling unit may for instance comprise sections, wherein each section comprises one or more of the scale reducing elements.

The use of scale inhibitors and ion exchange elements in domestic appliances wherein water is heated may provide a considerable extension of the number of operating hours, or the amount of liters water heated without malfunctioning. The term "malfunctioning" especially relates to an undesired change in the functioning of the device. Malfunctioning may in embodiments be defined as a complete blockage of the water flow. Yet, malfunctioning may also relate to a predetermined increase in preparation time per cup of coffee (or other drink). The efficiency/effectiveness of the scale reducing measures may especially be related to an increase in an operating time or an increase in a volume of water processed until malfunctioning (relative to devices without the scale reducing measures).

It has been experimentally found that the use of scale inhibitors and ion exchange resins may increase the amount of water that can be processed (heated) in a coffee machine until malfunctioning with a factor six of more. The scale inhibitor and/or the ion exchange element may significantly reduce the scale formation / deposition in such device. However, this effect is far less significant in devices that generate steam in addition to hot water. Experimentally it was found during usability tests that the amount of water that may be processed in an appliance (including an ion exchange element and a scale inhibitor) with a steam function (and alternately heating and evaporating the water) may be a factor six or more lower than in the appliance without steam function (however still significantly higher compared to a reference wherein no ion exchange element and inhibitor are applied). Thus, the efficiency or effectiveness of the combination of the ion exchange element and the scale inhibitor element was found to be reduced with at least a factor six when tested in hot water/steam combinations compared to hot water only. Further analyses showed that during generation of steam, scale particles had accumulated in a valve that appeared to be sensitive for calcification. By contrast, no accumulation was found in said valve when the water was heated only.

Without being bound to theory, it is hypothesized that during steaming, all the water surrounding dissolved solids (e.g. scale particles or crystals) is removed by evaporation. Some of the scale solids may be transported with the steam, but most solids may settle on the hot surface of the heating unit and form a solid scale layer. This solid layer may only weakly adhere to the surface of the heating unit and may be very brittle. If the device is subsequently used in the heating mode, the solid layer may break into smaller scale particles due to thermal stress. These particles may be flushed away with the hot water and accumulate further downstream of the heating unit in the first flow restriction they encounter. If no evaporation/steaming takes place in the heating unit (and thus no scale layer is present in the heating unit), the water may comprise substantially only small scale crystals that may easily be entrained in the water and may flow through the device and its flow restriction(s) without accumulation.

Therefore, the device according to the invention comprises the scale collector element (or "scale collector") to collect scale particles upstream of such flow restriction in which the particles otherwise may have accumulated. The scale collector element is arranged downstream of the heating unit. The scale collector element may for instance be configured at an outlet of the heating unit and may e.g. physically contact the heating unit. In other embodiments, the scale collector element may be arranged further downstream of the heating unit. In particular, the scale collector element is arranged upstream of any (scale sensitive) flow restriction.

Hence, the invention provides amongst others a combination of scale reducing measures such that an effective anti-scale solution is provided for devices, especially domestic appliances, with a steam function.

Herein the term "scale sensitive flow restriction" relates to a flow restriction in which a scale particle may slow down relative to the fluid transporting said scale particle. The flow restriction does not necessarily restrict the fluid flow itself. For instance, the restriction may restrict a flow of the scale particle, without substantially restricting a flow of the fluid. The particles may at least partly be blocked by the flow restriction and therefore may accumulate in the flow restriction. The flow restriction may comprise "dead zones" in which the particles may accumulate. The flow restriction may comprise a flow channel with a cross section that is too small for the particles to flow through. The scale particles may e.g. have a main dimension of 1 mm or more and said cross section may have a cross section dimension that is also in the range of 1 or 2 mm, or smaller. As such, scale particles may start to accumulate in the flow restriction. Also, if the cross sectional dimension of a flow restriction is larger than the main dimension of the scale particle, the scale particle may still be blocked, or a cluster of scale particles may be blocked. Such flow restriction too may be indicated as a scale sensitive flow restriction. Furthermore, the flow restriction may for instance comprise a scale sensitive surface, e.g. a curved wall, a sharp bend, a rough surface, and/or a surface that promotes adherence of scale. The scale sensitive flow restriction may for instance comprise a valve, an orifice, a joint and/ or a junction. The scale sensitive flow restriction may comprise a combination of the aforementioned flow restrictions.

Hence, the term "scale sensitive" in a scale sensitive flow restriction relates to a flow restriction in which, or upstream of which, scale particles (that are transported by water or steam) may easily accumulate. Herein such scale sensitive flow restriction may also be referred to as just "flow restriction". The flow restriction may especially comprise a restriction for a flow of one or more scale particles, especially for a scale particle having a particle size ≥ 0.1 mm, such as ≥ 0.3 mm, especially ≥ 0.5 mm, such as ≥ 1 mm.

The term "flow restriction" may for instance relate to a valve, a piping or tube with a changing, such as decreasing, cross sectional area, or with a curve, a bend, a junction or an intersection, or a location where different elements of the hydraulic system are connected to each other, etc.. The flow restriction may also comprise a filter, a gauze, an orifice, etc. The flow restriction may especially comprise an element or location where the cross sectional area of the flow path changes, especially decreases (like a valve, an orifice, etc.) and/or wherein a direction of flow may (acutely) change (such as a junction, an intersection and/o a joint) and/or wherein a flow of scale particles is at least partly inhibited (such as by adherence to the element and/or friction with the element).

The scale collector element may advantageously be arranged upstream of any, i.e. all flow restriction(s) downstream of the heating unit. Preferably, the scale collector element is arranged upstream of a first (scale sensitive) flow restriction. Depending on the location of the flow restriction, the scale collector element may be arranged in the water processing unit or upstream thereof.

The scale collector element is especially configured for collecting scale particles from the fluid (water and/or steam) coming from the heating unit. Herein, also the term "trapping" may be used in relation to "collecting" (the scale particles). The scale collector element may not need to trap each and any particle or solid in the fluid. For instance, very small-scale crystals may not accumulate in the (scale sensitive) flow restriction. These small crystals may be transported through the device without causing malfunctioning, and therefore do not need to be trapped.

Especially, scale particles having a particle size of 1 mm or more may cause malfunctioning of the device (in time). Therefore, the scale collector element may be configured for trapping scale particles having a particle size equal to or larger than 1 mm. In further embodiments, the scale collector element is configured for trapping scale particles having a particle size ≥ 0.5 mm, or even ≥ 0.3 mm, especially ≥ 0.1 mm.

Scale particles mostly are not spherical but relatively flat. Furthermore, scale particles may be elongated or circular or have any further arbitrary shape. For instance, a scale particle may be 2 mm in a first direction, 0.5 mm in a second direction and only 10 µm in a third direction (with all directions perpendicular to each other). The most relevant size of the particle that may cause the particle to accumulate may especially be defined by a largest size of the particle, especially a largest distance along a straight line from one location at the edge of the particle to another location of the edge. The terms "size" or "dimension" in "particle size" or in "(largest) dimension of the scale particle" may therefore especially refer to that relevant (largest) size.

The scale particles may be collected by mechanically screening out the particles. The scale collector may for instance comprise a flow-through element, wherein the scale particles are blocked by the element but the fluid may flow through. The scale collector may comprise a mechanical separator for separating the scale particles from the fluid, e.g. a sieve, a restriction, and/or a barrier. The particles may e.g. be removed from the fluid by a direct interception of the particles flowing through the scale collector. Additionally or alternatively, the particles may be removed from the fluid by inertial impactions. In such case, the scale collector element may for instance comprise a cyclone. Alternatively, a (determined) directional change, e.g. a curve may be provided in the flow path, wherein the particles (because of inertial forces) continue to move in a straight line (where they are collected) while the fluid may follow the directional change.

The scale collector may comprise a mesh, a sieve, a gauze, a screen, a filter or a perforated plate. Such mesh, sieve, gauze, screen, filter, or perforated plate may comprise through holes with a minimum (mesh or hole) size that is equal to or smaller than the size of the scale particle (to be trapped). The through holes may essentially have any geometry. They may for instance be circular, elongated, rectangular or square. In further embodiments, the scale collector element may comprise a sieve with a mesh size (d), wherein the mesh size (d) is equal to or smaller than 2 mm, especially equal to or smaller than 1 mm, such as equal to or smaller than 0.5 mm, especially equal to or smaller than ≤ 0.3 mm. The term "size" in relation to mesh size, and size of the through hole etc. may especially relate to a smallest dimensions of the mesh, through hole etc., especially the dimension that is most relevant for blocking a scale particle.

The through holes in the scale collector element may be larger than 10 µm, such as at least 50 µm to prevent the scale collector from clogging. The mesh size (or a - minimal - size of through holes in the scale collector element) may especially be equal to or at least 0.1 mm, such as equal to or at least 0.2 mm. In embodiments, the mesh size and/or the size of through openings in the scale collector element may be at least 0.5 mm. In embodiments, the mesh size is selected from the range of 0.05-2 mm, especially 0.05-1 mm, such as 0.1-1 mm.

The sieve (or mesh, gauze, filter, etc.) may have a three dimensional sieve profile. This may enhance a total scale (particles) holding capacity, while maintaining (optimal) operational performance, such as a flow through and pressure drop over the scale collector. The three dimensional profile may comprise three dimensional flow passages. Such scale collector comprising a three dimensional sieve profile may also be known as a "depth filter" or "depth sieve" and may be characterized by an increased scale holding capacity. A "flat" sieve, screen or filter may collect scale at a surface of the filter or sieve, whereas a depth filter or depth sieve may collect scale particles in a body of the filter, over a depth of the filter or sieve. The scale collector may e.g. comprise a porous or sponge like structure or a layered structure configured to trap particles. The depth filter may comprise through holes, especially pores, from an upstream end to a downstream end of the filter.

The scale collector element, especially the depth sieve or depth filter, may comprise through holes or pores of which the cross sectional area may gradually change, e.g. reduce in flow direction (i.e. from the upstream side to the downstream side). Also, the direction of the longitudinal axis of the through holes may change along the length of the axis. It may for instance be curved. The pores may have sizes as described above for the through holes.

The scale collector, especially the sieve, may comprise a multilayer structure. Such multilayer structure may comprise a plurality of layers each comprising through holes, wherein the layers are connected to each other such that the through holes of adjacent layers are fluidly connected to each other and together define the through holes (from the upstream side to the downstream side).

The term "through holes" may thus in embodiments relate to pores. As such, the layers of the multilayered structure may be arranged to form a gradient density pore structure, especially having more large pores at the upstream side and smaller pores at the downstream side. A ratio of the size of the pores or through holes at the upstream side to the size of the pores or through holes at the downstream side may e.g. be equal to or smaller than 100, such as equal to or smaller than 50, especially equal to or smaller than 10, and especially equal to or larger than 1. In embodiments, the size of the through holes or pores at the upstream side may be in the range of 1-3 mm. Herein, the size of the pores or through holes are especially related to the (local) cross sectional area perpendicular to the flow direction or axis (of the through holes or pores)

The scale collector element may also be configured to block and screen scale particles and allow the particles to settle without substantially blocking the fluid flow. Especially if flat scale particles are trapped in a three dimensional sieve profile, flow passages may be formed between the scale particles thereby preventing a (complete) blockage of the fluid. The size of the through holes at a first side of the scale collector element may be smaller than the size at the opposite side. The scale collector element, e.g. the sieve, screen or filter, is advantageously arranged such that all fluid from the heating unit must flow through the scale collector, without bypassing it. To that end, the scale collector element may for instance be sealingly arranged in the flow path of the fluid.

The scale collector element, e.g. the sieve or perforated plate, may comprise or be made of hydrophobic material to reduce possible adherence of the scale particles and facilitate cleaning of the scale collector element. The scale collector element may comprise a hydrophobic coating comprising the hydrophobic material. Examples of hydrophobic materials are, e.g., polyethylene, polypropylene, polystyrene, polyvinylchloride, polytetrafluorethylene, polydimethylsiloxane, and polyethylene terephthalate.

The scale collector element may be removably arranged in the device. Thus, the collected scale particles may be removed from the scale collector element. After cleaning, the scale collector element may be re-arranged in the device. Alternatively, the scale collector element may be a disposable scale collector element. After removal, a new scale collector element may be used to replace the used one

In yet further embodiments, the scale collector element and one or more of the scale inhibitor dosing element and the ion exchange element may be arranged in a single unit, e.g. aforementioned scale handling unit. One or more of the ion exchange element, the scale inhibitor dosing unit and the scale collector element may be removably arranged in the scale handling unit.

The term "scale handling unit" may especially relate to a plurality of (different) scale handling units. The scale handling unit or a part thereof may be integrated in the device. Alternatively, the scale handling unit may be removable. The device may comprise one or more scale handling units. The scale handling unit may be a disposable scale handling unit. The scale handling unit may be regenerated, cleaned and/or refilled. Alternatively, it may be replaced by another (fresh/ new) scale handling unit. It may be replaced after a determined operating time of the device. In further embodiments, the device may be configured to indicate when the scale handling unit (or the ion exchange element and/or the scale inhibitor dosing element and/or the scale collector element) needs to be replaced and/or cleaned.

The term "scale handling unit" may refer to units with different functionalities as described above. One embodiment of the scale handling unit may e.g. comprise the scale inhibitor dosing unit and the ion exchange element, whereas another embodiment of the scale handling unit may comprise the scale inhibitor dosing element and the scale collector element. These different scale reducing elements may functionally be arranged at different locations relative to the fluid flow path through the device. For instance, the scale inhibitor dosing element may be arranged upstream of or in the heating unit whereas the scale collector element may be arranged downstream of the heating unit. Yet, physically the scale inhibitor dosing element and the scale collector element may be both arranged in the same scale handling unit. The fluid flow path may be arranged such that it passes the scale handling unit twice: first along the scale inhibitor dosing element, then for instance along the heater, and then back through the scale handling unit but this time along the scale collector element.

Thus, the scale handling unit may comprise a plurality of the scale reducing elements, that may be arranged in sections of the scale handling unit and that are not necessarily in direct fluid connection with each other (i.e. without a further functional element arranged between the scale reducing elements). Each of the scale reducing elements (or each of the sections) of the scale handling unit may comprise a fluid inlet and fluid outlet of the respective element or section. The scale handling unit may therefore comprise a plurality of fluid inlets and/or fluid outlets. The fluid inlets may be fluidly connected to upstream ends of the respective scale reducing elements. Likewise, the fluid outlets may be fluidly connected to the downstream ends of the respective scale reducing elements. A total number of the fluid inlets and outlets does not necessarily correspond to a total number of the scale reducing elements of the scale handling unit. For instance, two of the scale reducing elements may be configured in one section of the scale reducing unit and thus may share an inlet and/or outlet. In further specific embodiments, e.g., comprising only an ion exchange element and a scale inhibitor dosing element, the scale handling unit may only comprise one scale handling unit fluid inlet and one fluid outlet, wherein for instance fluid entering the scale handling unit may first flow through the ion exchange element and next flow through the scale inhibitor dosing element. It will be understood that further embodiments may comprise other configurations with respect to the number of fluid inlets and outlets, the number of scale reducing elements, and the number of sections of the scale handling unit.

The device may be configured for providing a fluid flow path from the water supply opening (or from a location upstream of the water supply opening) to or through the water processing unit and to one or more fluid outlets of the water processing unit.

The device may comprise or be connectable to a water supply element, e.g. a water container. The water supply element may be fluidly connected to the water supply opening. The scale inhibitor dosing element may be arranged in the water supply element. Optionally, the ion exchange element and/or the scale handling unit may be arranged in the water supply element as well.

The water processing unit may comprise any type of unit in which water is functionally used or processed, especially in the liquid and/or gaseous state. The type of water processing unit may depend on the type of device, especially the type of domestic appliance. As discussed above, the device may e.g. comprise a domestic appliance selected from the group consisting of a coffee maker, an espresso machine (or espresso maker), a tea maker, a water kettle, a cappuccino maker, a steam iron, a steam generating device, a food steamer, and a steam cleaner. Therefore, for instance, in a cappuccino maker, the water processing unit may comprise a brewing unit and a steam pipe for frothing milk; in a steam iron, the water processing unit may comprise an iron plate and/or an opening for providing steam; in a steam cleaner, the water processing unit may comprise a steam applicator, etc..

The device may comprise a controller or control system or unit. The control unit or controller may e.g. be configured to control one or more of the flow control device (e.g. a pump or valve), the heating unit, the scale inhibitor dosing element, or other (functional) components of the device.

The invention further provides a scale handling unit, especially for arranging in a device described herein. The (disposable) scale handling unit may thus comprise a scale inhibitor dosing element configured for providing a scale inhibitor to fluid at a location upstream of (or in) the heating unit of the device during operation (when being arranged in the device). The (disposable) scale handling unit may further comprise an ion exchange element configured for removing calcium ions from water contacting the ion exchange element. Additionally or alternatively, the (disposable) scale handling may comprise a scale collector element configured for collecting scale particles from fluid, especially water, flowing through the scale collector element from the heating unit to a flow restriction during operation (of the device).

The disposable scale handling unit may be configured in accordance to the embodiments of the scale handling unit described herein.

In specific embodiments, e.g., the disposable scale handling unit comprises (at least) the scale inhibitor dosing element and the ion exchange element, wherein the scale inhibitor dosing element comprises a total inhibitor volume (Vi) of scale inhibitor, wherein the ion exchange element comprises an ion exchange resin comprising a total resin volume (Vr), especially wherein a ratio of the resin volume (Vr) to the inhibitor volume (Vi) is selected from the range of 500:1 - 50:1.

In yet a further aspect, the invention also provides a method for collecting scale in a device with a steam function described herein, especially wherein the device comprises a heating unit configured for heating water in a heating mode and for converting water into steam in a steam formation mode.

In specific embodiments, the method comprises (i) controlling a fluid comprising water to flow from a water supply opening via the heating unit to a water processing unit of the device and providing a scale inhibitor to the water at a location upstream of the heating unit and/or in the heating unit; (ii) heating the water by the heating unit in the heating mode to release scale particles (that may have been) deposited in the steam formation mode at a location in the heating unit and/or at a location downstream of the heating unit, and carrying the released scale particles with the water towards a water processing unit; and (iii) collecting the scale particles from the water by a scale collector element arranged downstream of the heating unit and upstream of a flow restriction, more preferably upstream of any flow restriction of the device (at a location downstream of the heating unit).

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts and embodiment of the device;
Fig. 2 schematically depicts another embodiment of the device;
Fig. 3 schematically depicts aspects of an embodiment of the scale collector; and
Fig 4. Schematically depicts some further aspects of the screen collector element.

The schematic drawings are not necessarily to scale.

### DETAILED DESCRIPTION OF THE EMBODIMENTS

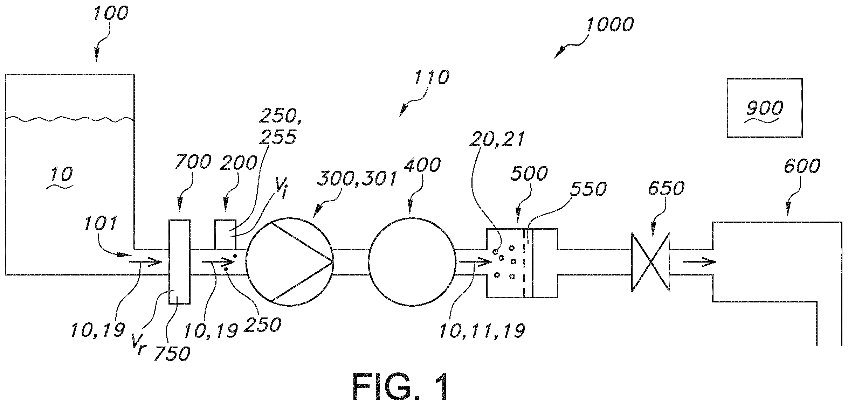

In fig. 1, an embodiment of the device 1000 is depicted. The embodiment comprises a water supply opening 101, a flow control device 300, a heating unit 400, and a water processing unit 600. The device 1000 comprises a steam function, meaning that it may convert water 10 into steam 11. The heating unit 400 is configured for heating the water 10 in a heating mode and for converting the water 10 into steam 11 in a steam formation mode. The selection of the modes and the switching between the modes etc. may be done by hand. Alternatively or additionally, it may be controlled by a control system 900.

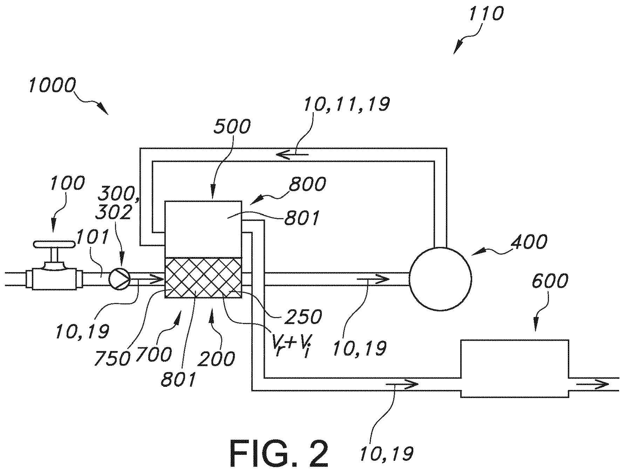

When heating the water 10, scale 20 may be formed, especially in and downstream of the heating unit 400. To reduce scale formation and/or scale depositing, the illustrated device 1000 comprises three scale reducing elements: an ion exchange element 700, a scale inhibitor dosing element 200, and a scale collector element 500. The scale reducing elements, each individually as well as together, help preventing accumulation of scale particles 21 in any flow restriction 650 downstream of the heating unit 400 and as such may help in realizing a desired constant fluid 19 flow through the water processing unit 600. The scale inhibitor dosing element 200, the scale collector element 500 and/or the ion exchange element 700 may be removably arranged in the device 1000, separately or combined, e.g. in a single removable scale handling unit 800, as will be described below with reference to Fig. 2.

The scale inhibitor dosing element 200 is configured for providing, during use, a scale inhibitor 250 to the water 10, either at a location upstream of the heating unit 400 (as illustrated) or in the heating unit 400 (not shown). The scale inhibitor dosing element 200 may provide the water 10 with the scale inhibitor 250 in the range of for example 1-10 ppm. The ion exchange element 700 is configured to remove calcium ions from the water 10. It may be arranged upstream of the heating unit 400 (as illustrated) or in the heating unit 400 (not shown). The scale collector element 500 is configured for collecting scale particles 21 from the fluid 19 flowing there through. It is arranged downstream of the heating unit 400 and upstream of the flow restriction 650, more generally, upstream of any flow restriction 650 downstream of the heating unit 400. The scale collector element may be removable, thus allowing collected scale particles 21 to be easily removed from the device.

The flow control device 300 is configured for providing the fluid 19 comprising water 10 (liquid water 10 and/or steam 11) to flow from the water supply opening 101 via the heating unit 400 to the water processing unit 600. In the illustrated embodiment, the flow control device 300 is arranged in the device 1000, i.e. it forms part of the device 1000. In alternative embodiments (not shown), the flow control device 300 may be a separate component to which the water supply opening 101 may be fluidly connected. The flow control device 300 may for instance comprise a pump 301, as depicted. Alternatively or additionally, it may for instance comprise a valve 302 (as depicted in Fig. 2).

In the illustrated embodiment, the device 1000 is with its water supply opening 101 fluidly connected to a water supply element 100, here a water container. In specific embodiments (not shown), the water supply element 100 may comprise the scale inhibitor dosing element 200, optionally in combination with the ion exchange element 700, e.g. in a scale handling unit 800.

All (functional) elements, starting upstream with the water supply element 100 and up to the water processing unit 600 define a hydraulic circuit 110, with continuous fluid flow path from the upstream side to the downstream side.

The control system 900 may for instance control the flow control device 300, the water processing unit 600, etc. It may further disable the heating unit and/or the flow control device if one or more of the scale reduction elements 200, 500, 700 is not or not correctly arranged in the device 1000.

As described above, scale 20 may especially be formed in the steam formation mode. In the steam formation mode, a layer of scale 20 may be deposited in the heating unit 400 and/or downstream of the heating unit 400. In the heating mode, this layer of deposited scale 20 may break up in scale particles 21. These scale particles 21, especially when having a particle size of 1 mm or more, may accumulate in the flow restriction 650. Therefore, the scale collector element 500 may be especially configured for trapping at least scale particles 21 having a particle size equal to or larger than 1 mm.

The device 1000 may be a domestic appliance or a part thereof, such as a coffee maker, an espresso machine, a tea maker, a water kettle, a cappuccino maker, a steam iron, a steam generating device, a food steamer, and a steam cleaner. The domestic appliance may thus be used in the preparation of a food or drink. In such case, the scale inhibitor 250 preferably comprises a food approved scale inhibitor 250, especially comprising a poly-phosphate compound 255.

In the illustrated embodiment, the scale inhibitor dosing element 200 may be configured to provide the scale inhibitor 250 to the water 10 via a scale inhibitor liquid comprising the scale inhibitor. In other embodiments, the scale inhibitor dosing unit 200 may for instance be configured as a flow-through unit, wherein flow scale inhibitor is provided to the water when the water flows through the scale inhibitor dosing unit. The scale inhibitor 250 may be provided at a location downstream of the ion exchange element 700, as illustrated. In other embodiments, the arrangement of the ion exchange element 700 and the scale inhibitor dosing element 200 relative to each other and/or the heating unit 400 may differ.

In Fig. 2, a further embodiment of the device 1000 is depicted. In this embodiment, the configuration of the hydraulic circuit 110 is structurally different from the one of Fig 1. In Fig. 1, all structural/physical elements are configured in series, whereas these structural elements are arranged in a more complex way in Fig. 2. Yet, the arrangement of the functional components of the hydraulic circuit 110 (the flow direction is indicated by the arrows) is not significantly changed. The embodiment of Fig. 2 comprises a scale handling unit 800, comprising the scale inhibitor dosing element 200, the scale collector element 500 and the ion exchange element 700. Especially, the ion exchange element 700 and the scale inhibitor dosing element 200 are arranged in a first section 801 of the scale handling unit 800. The scale collector element 500 is arranged in a second section 802. The two sections 801, 802, are not in direct fluid connection with each other. The water 10 first flows through the first section 801, then through the heating unit 400, and then through the second section 802, more particularly through the scale collector element 500.

The scale handling unit 800 may comprises two or more of the scale reducing elements (i.e. the scale inhibitor dosing element 200, the scale collector element 500 and the ion exchange element 700). As such, the arrangement of the scale handling unit 800 may depend on the scale reducing elements it comprises. Preferably, the scale handling unit 800 or at least a part thereof is removably arranged in the device 1000. The scale handling unit 800 may especially be a disposable scale handling unit 800.

To provide the desired function, the total ion exchange volume Vr may be significantly larger than the total scale inhibitor volume Vi. For instance, in the scale handling unit 800 in Fig. 2, a ratio of the total resin volume Vr to the total inhibitor volume Vi may range from 500:1 to 50:1 (because the ion exchange resin 750 and the scale inhibitor 250 are mixed, only the combined volume Vi+Vr is illustrated in Fig. 2).

In the embodiment of Fig. 2, the device 100o is with its water supply opening 101 fluidly connected to a water supply element 100, here a water tap. Because the water supply element 100 may force the water 10 through the water supply opening 101, the flow control device 300 in this embodiment may comprise a simple valve 302 to control the fluid flow.

In the embodiment of Fig. 2, there is no flow restriction 650 between the outlet of the heating unit 400 and the inlet of the water processing unit 600. Instead, the flow restriction 650 may be comprised in the water processing unit 600.

Fig. 1 and Fig. 2 further also illustrate embodiments of the method for collecting scale 20 in the device 1000. In the method, a fluid 19 comprising water 10 is controlled to flow from the water supply opening 101 via the heating unit 400 to the water processing unit 600, while the scale inhibitor 250 is provided to the fluid 19 at a location upstream of the heating unit 400. In the heating unit 400, the water 10 is heated in the heating mode and may cause scale particles 21 that have been deposited in and/or downstream of the heating unit 400 during the steam formation mode, to release. The released particles 21 are carried with the water 10 in the direction of the water processing unit 600 and are collected from the water 10 by the scale collector element 500 that is arranged downstream of the heating unit 400 and upstream of the flow restriction 650.

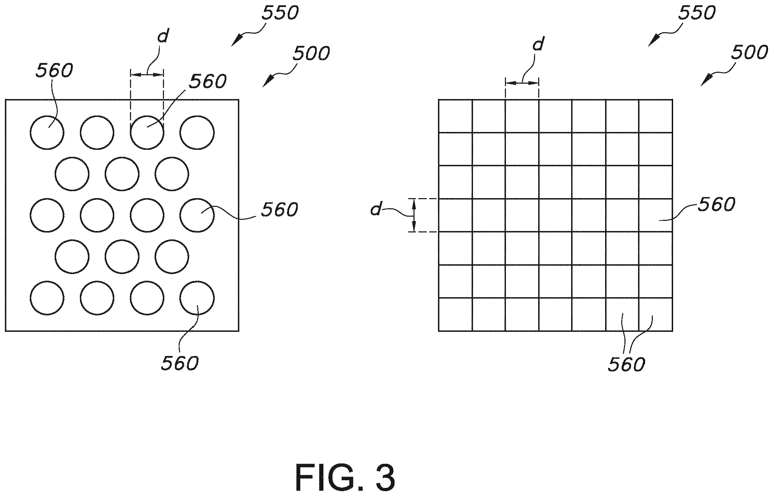

Fig. 3 shows two embodiments of a scale collector element 500, more particularly of sieves 550 that may form part of such scale collectors 500, with through holes 560. The sieves 550 may for instance comprise a random perforated plate with a more or less random pattern, as illustrated at the left hand side, or a more symmetrically pattern, as illustrated at the right hand side. In both embodiments, a sieve 550 is depicted with a mesh size d. Herein this may also be indicated as comprising through holes 560 (or pores) with a through hole size d (or a pores size d). In further embodiments, a diagonal of (e.g. rectangular and/or square) through holes 560 may be indicated as through hole or mesh size d.

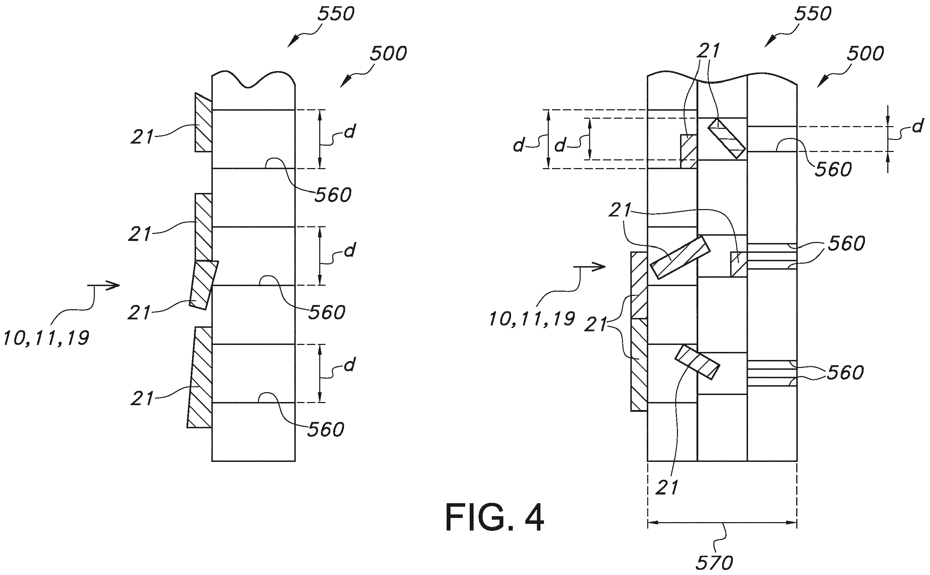

In Fig. 4, some aspects of the scale collector element 500 are depicted. At the left hand side, a section of a flat screen or sieve 550 is depicted. The flat sieve 550 comprises through holes 560 with a size d. The scale particles 21 may be blocked by the sieve and accumulate at the surface. At the right hand side, a depth sieve 550 is depicted, comprising a three dimensional (sieve) profile, comprising through holes 560 with a changing size d along the longitudinal axis of said through holes 560. In the figure, all through holes 560 are straight holes, and as such the longitudinal axis of the through holes 560 are parallel to a depth direction 570 of the sieve 550. In other embodiments, the through holes 560 may not be straight but e.g. curved or bend. The size d of the through holes 560 is larger at the upstream side (see arrow indicating the flow direction of the fluid 10, 11, 19) than the downstream side. Based on this three dimensional profile of the depth sieve 550, scale particles 21 may be trapped inside the sieve 550, without obstructing the fluid 19 flow, as is very schematically depicted. In the depicted embodiment, the depth sieve 550 comprises three layers connected to each other. Yet different configurations are possible for a depth sieve according to the invention. Essentially, a depth sieve may have a higher dirt holding capacity than a flat sieve 550.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

The article "a" or "an" preceding an element does not exclude the presence of a plurality of such elements.

The mere fact that certain measures are recited in mutually different dependent claims does not indicate that a combination of these measures cannot be used to advantage.

The invention also provides a control system that may control the device, apparatus, or system, or that may execute the herein described method or process.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A device (1000) with a steam function, wherein the device (1000) comprises a water supply opening (101), a scale inhibitor dosing element (200), a heating unit (400), a scale collector element (500), and a water processing unit (600), wherein:
- a flow control device (300) is configured for providing a fluid (19) comprising water (10) to flow from the water supply opening (101) via the heating unit (400) to the water processing unit (600);
- the scale inhibitor dosing element (200) is configured for providing a scale inhibitor (250) to the fluid at a location in the heating unit (400) and/or upstream of the heating unit (400);
- the heating unit (400) is configured for heating the water (10) in a heating mode and for converting the water (10) into steam (11) in a steam formation mode; and
- the scale collector element (500) is arranged downstream of the heating unit (400) and upstream of any scale sensitive flow restriction (650), wherein the scale collector element (500) is configured for collecting scale particles (21) from the fluid (19) flowing through the scale collector element (500).

2. The device (1000) according to claim 1, wherein the scale collector element (500) is configured for trapping scale particles (21) having a particle size equal to or larger than 1 mm.

3. The device (1000) according to any one of the preceding claims, wherein the scale collector element (500) comprises a sieve (550) with a mesh size (d), wherein the mesh size (d) is selected from the range of 0.1-1 mm.

4. The device (1000) according to any one of the preceding claims, wherein the flow restriction (650) comprises one or more of a valve (302), an orifice, a joint and a junction.

5. The device (1000) according to any one of the preceding claims, wherein the scale inhibitor (250) comprises a food approved scale inhibitor (250) comprising a poly-phosphate compound (255).

6. The device (1000) according to any one of the preceding claims, wherein the scale inhibitor dosing element (200) is configured to provide the water (10) with the scale inhibitor (250) in the range of 1-10 ppm.

7. The device (1000) according to any one of the preceding claims, further comprising an ion exchange element (700) configured to remove calcium ions from the water (10).

8. The device according to claim 7, wherein the ion exchange element (700) is arranged upstream of the scale inhibitor dosing element (200), or upstream of a first location where the scale inhibitor dosing element (200) provides scale inhibitor (250) to the water (10).

9. The device (1000) according to any one of the preceding claims, wherein one or more of the scale inhibitor dosing element (200), the scale collector element (500) and the ion exchange element (700) are removably arranged in the device (1000).

10. The device (1000) according to any one of the preceding claims, wherein the device (1000) further comprises a water supply element (100) in fluid connection with the water supply opening (101), wherein the water supply element (100) comprises the scale inhibitor dosing element (200).

11. The device (1000) according to any one of the preceding claims, wherein the device (1000) comprises a domestic appliance selected from the group consisting of a coffee maker, an espresso machine, a tea maker, a water kettle, a cappuccino maker, a steam iron, a steam generating device, a food steamer, and a steam cleaner.

12. The device (1000) according to any one of claims 7 to 11, wherein the scale inhibitor dosing element (200) comprises a total inhibitor volume (Vi) of scale inhibitor (250), wherein the ion exchange element (700) comprises an ion exchange resin (750) comprising a total resin volume (Vr), wherein a ratio of the total resin volume (Vr) to the total inhibitor volume (Vi) is selected from the range of 500:1 - 50:1.

13. The device (1000) according to any one of the preceding claims, wherein the device (1000) comprises a scale handling unit (800), wherein the scale handling unit (800) comprises two or more of (i) the scale inhibitor dosing element (200), (ii) the scale collector element (500) and (iii) the ion exchange element (700), and wherein the scale handling unit (800) is a disposable scale handling unit.

14. A disposable scale handling unit (800) for arranging in a device (1000) according to any one of claims 1-13, wherein the scale handling unit (800) comprises a scale inhibitor dosing element (200) configured for providing a scale inhibitor (250) to water at a location upstream of and/or in the heating unit (400) of the device (1000) during operation and (i) an ion exchange element (700) configured for removing calcium ions from water contacting the ion exchange element (700) and/or (ii) a scale collector element (500) configured for collecting scale particles (21) from fluid (19) flowing through the scale collector element (500).

15. A method for collecting scale (20) in a device (1000) with a steam function, wherein the device (1000) comprises a heating unit (400) configured for heating water (10) in a heating mode and for converting water (10) into steam (11) in a steam formation mode, the method comprising:
- controlling a fluid (19) comprising water (10) to flow from a water supply opening (101) via the heating unit (400) to a water processing unit (600) of the device (1000) and providing a scale inhibitor (250) to the water (10) at a location upstream of the heating unit (400) and/or in the heating unit (400);
- heating the water (10) by the heating unit (400) in the heating mode to release scale particles (21) deposited in the steam formation mode at a location in the heating unit (400) and/or at a location downstream of the heating unit (400), and carrying the released scale particles (21) with the water (10) towards the water processing unit (600); and
- collecting the scale particles (21) from the water (10) by a scale collector element (500) arranged downstream of the heating unit (400) and upstream of a flow restriction (650) of the device (1000).
